# EUROPEAN PATENT SPECIFICATION

(11) **EP 2 677 401 B1**
(45) Date of publication and mention of the grant of the patent: **09.03.2022**
(21) Application number: 12173185.5
(22) Date of filing: 22.06.2012
(51) Int. Cl.: G06F 3/033

(54) **Image data generation using a handheld electronic device**
Bilddatenerzeugung unter Verwendung einer tragbaren elektronischen Vorrichtung
Génération de données d'image à l'aide d'un dispositif électronique portatif

(43) Date of publication of application: 25.12.2013
(73) Proprietor: BlackBerry Limited, Waterloo, ON N2K 0A7 (CA)
(72) Inventor: Oliver, Robert George, Waterloo, Ontario N2L 3W8 (CA); Snow, Christopher Harris, Waterloo, Ontario N2L 3W8 (CA); Almalki, Nazih, Waterloo, Ontario N2L 3W8 (CA); Dods, Jeffrey Alton Hugh, Waterloo, Ontario N2L 3W8 (CA); Schwend, Diana J., Seattle, WA 98104 (US); McCann, Robert Emmett, Seattle, WA 98104 (US); Turner, Benjamin John, Seattle, WA 98104 (US)
(74) Representative: Vigand, Philippe

(56) References cited:
- EP-A1- 1 255 185
- GB-A- 2 329 300
- US-A1- 2006 244 738
- US-A1- 2009 070 060

## Description

### BACKGROUND

Input of data to a computer or other electronic device is commonly provided by a peripheral input device, such as a keyboard, a touch screen, a touchpad, a joystick, a computer mouse, or a graphics tablet and stylus. Some of these input devices may be employed for drawing or handwriting. A computer mouse, for instance, used for drawing or handwriting may be difficult to control since is it designed to be moved by the palm, and not the fingers, of the user. A graphics tablet and stylus provide good user control, and are well suited to desktop applications. However, for mobile applications it may be inconvenient to carry extra input devices.

Touch screen input is particularly difficult for very small, mobile handheld electronic devices having small touch screens. While an integrated stylus may enable a user to input motion data to a mobile, handheld electronic device, it may be difficult for the user to obtain a visual feedback of the image produced on the screen of the device.

It would be advantageous, therefore, to provide an improved way of generating image data using a handheld electronic device.

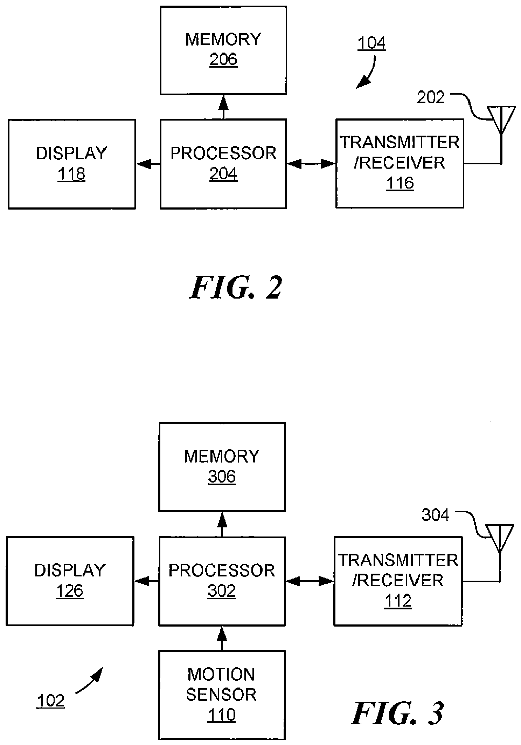

GB2329300 relates to a pen shaped mobile telephone 1 comprises a display device 5, an aerial/pen clip 8, menu selection button 9 and motion sensor 10. In order to enter data, eg telephone number, address, SMS text, the user simply writes the appropriate text, in response to which the motion sensor(s) sends signals to a character recognition device. The motion may be detected by a roller ball, acceleration sensor, or optical displacement sensor and functions may be selected via the menu selection button 9. In another embodiment, the pen shaped data input device is separate from the main mobile telephone body (fig. 3) and transmits the data from its movement sensor(s) to the telephone for remote character recognition. Device may also be used to supplement short messages with drawings.

US2006/244738 relates to a pen input device has both a movement detection system and a position detection system that collectively track the position of the pen input device during a writing operation on a writing surface. The pen input device has a writing tip capable of performing a writing operation in contact with the writing surface. A controller is operable to activate the movement detection system intermittently during the writing operation. The movement detection system is operable to determine movement data that represent changes between successive positions of the writing tip. The position detection system is operable to determine position data that represents a position of the writing tip on the writing surface.

EP1255185 relates to a mobile telephone is provided, that is easy to manipulate manually and can perform electric authentication and input a character by providing an additional value to a conventional mobile telephone. A mobile telephone 1 is disposed which communication information, and as motion detecting means which detects all or some movement of the main body of the mobile telephone 1, a CCD 40, a camera 50 and the like are disposed.

US2009/070060 relates to recognizing a motion that is capable of performing a pointing function and a character input function using motions sensed by an optical sensor and an inertial sensor. The apparatus includes an inertial sensor sensing a first motion by using at least one of acceleration and angular velocity that are generated by an input motion; an optical sensor sensing a second motion by using reflection of light due to the motion; a locus calculating unit calculating the locus of the motion on the basis of the locus of the first motion and the locus of the second motion; and a communication unit transmitting the calculated locus of the motion.

The present invention is set out in the independent claims, with some optional features set out in the claims dependent thereto.

### BRIEF DESCRIPTION OF THE DRAWINGS

Exemplary embodiments of the present disclosure will be described below with reference to the included drawings such that like reference numerals refer to like elements and in which:
FIG. 1 is a diagrammatic representation of a system for data input in accordance with exemplary embodiments of the present disclosure;
FIG. 2 is a block diagram of a remote electronic device in accordance with exemplary embodiments of the present disclosure;
FIG. 3 is a block diagram of a handheld electronic device in accordance with exemplary embodiments of the present disclosure; and
FIG. 4 is a flow chart of a method for data input, in accordance with exemplary embodiments of the present disclosure.

### DETAILED DESCRIPTION

For simplicity and clarity of illustration, reference numerals may be repeated among the figures to indicate corresponding or analogous elements. Numerous details are set forth to provide an understanding of the illustrative embodiments described herein. The embodiments may be practiced without these details. In other instances, well-known methods, procedures, and components have not been described in detail to avoid obscuring the disclosed embodiments. The description is not to be considered as limited to the scope of the embodiments shown and described herein.

An integrated stylus may be employed to provide motion data to a mobile or handheld electronic device. However, if the mobile electronic device is held in a pen-like orientation, it is difficult for a user to obtain a visual feedback of the image produced from the motion data on the screen of the device. This is especially problematic for small mobile electronic devices.

The present disclosure relates to the generation of data input using a handheld electronic device. The data may be input to a computer, such as a laptop computer, a tablet computer, a desktop computer or networked computer, for example, and/or the handheld electronic device. A remote electronic device with a wireless connection to the handheld electronic device may be employed to provide visual feedback to a user. The handheld portable electronic may be a mobile telephone, a personal digital assistant (PDA), a digital audio player, an e-reader, or the like. Motion of the handheld electronic device is sensed using a motion sensor of the handheld electronic device and corresponding motion data is transmitted to the remote electronic device over a wireless communication channel. In response to the motion data, an image is rendered on the display of the remote electronic device. The sensor of the handheld electronic device comprises an optical sensor located at a corner of the handheld electronic device, enabling the device to be used in a pen-like manner.

The image rendered on the remote electronic device display provides a visual feedback to the user and facilitates control of the motion of the handheld electronic device. Such visual feedback may not be available using a display of the handheld electronic device, since the display is small, oriented at an angle to the user, and at least partially obscured by the hand of the user.

The final motion data, and images derived from the motion data, may be used as input data to the handheld electronic device, the remote electronic device, or both. The data may also be transmitted to a network for applications such as virtual meetings, for example.

Generation of the image from the motion data may be performed by the handheld electronic device, by the remote electronic device, or by both the handheld electronic device and the remote electronic device.

In one exemplary application, the image data is interpreted as handwriting and may be converted to characters. In such an application, visual feedback to the user allows characters to be drawn with greater accuracy.

Therefore, in accordance with certain aspects of the present disclosure, there is provided a method for generating an image on an electronic device as set forth in claim 1.

In accordance with another aspect of the present disclosure, there is provided a system comprising a hand held electronic device and an electronic device as set forth in claim 2.

DELETED.

In accordance with still further aspects of the present disclosure, there is provided a non-transitory processor-readable medium having processor-executable instructions as set forth in claim 4.

DELETED.

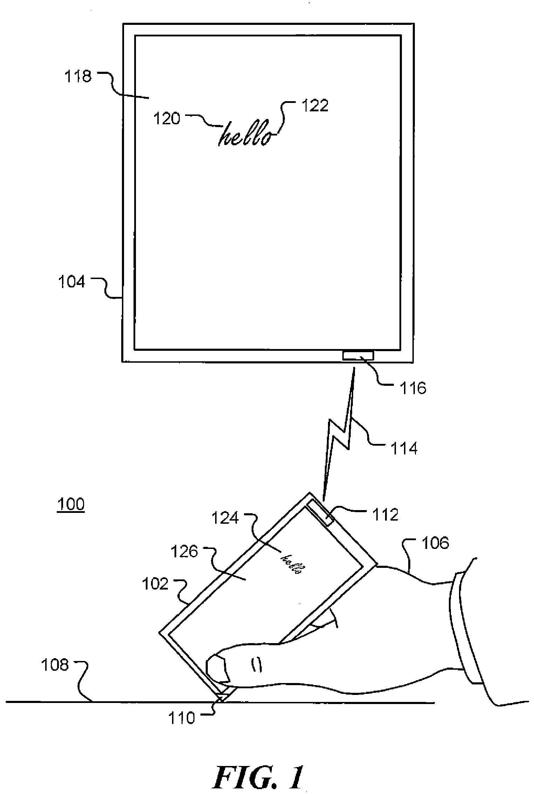

FIG. 1 is a diagrammatic representation of a system 100 for computer input in accordance with exemplary embodiments of the present disclosure. The system 100 includes a handheld electronic device 102 and a remote electronic device 104. In operation, the handheld electronic device 102 is moved by a user 106 across a surface 108. A sensor 110 senses motion of the device 102 as it moves across the surface 108. The sensor 110 comprises an optical sensor, similar to a sensor used in an optical computer mouse. A transmitter of wireless communication module 112 of the handheld device is used to transmit image data derived from the motion data over a communication channel 114 to a wireless communication module 116 of the remote electronic device. Thus, a receiver of the wireless communication module 116 receives data transmitted from the handheld electronic device 102, the data corresponding to image derived from the motion of the handheld electronic device with respect to a surface The sensor 110 comprises an optical sensor located in a corner of the handheld electronic device. In operation, an image dependent upon the transmitted data is rendered on a display 118 of the remote electronic device 104. In the example shown, the image 120 comprises handwritten text. The text follows the trajectory of the handheld electronic device 102, the end point 122 of the trajectory corresponding to the most recent position of the handheld electronic device 102. The motion data, or images derived from the motion data, may be employed for a variety of purposes. For example, motion data may be used to generate graphical input for use with a drawing application executed on the remote electronic device, or motion data may be used to enter handwritten text to be processing by a handwriting recognition application executed on the remote electronic device.

In one exemplary embodiment, the image 120 is duplicated as image 124 on a display 126 of the handheld electronic device 102. The image 124 is generated by the handheld electronic device 102.

FIG. 2 is a block diagram of a remote electronic device 104 in accordance with exemplary embodiments of the present disclosure. The remote electronic device 104 includes a wireless communication module 116. In the example shown, the wireless communication module 116 uses an RF antenna 202. However, other forms of wireless communication may be employed as well. In operation, the wireless communication module 116 receives motion data from a handheld electronic device and supplies it to a processor 204. The processor uses the motion data, in accordance with a motion-to-image mapping application executed on the processor, to generate images that are rendered on the display 118. The remote electronic device 104 may also include a memory 206 that may be used to store the image data of the motion data or both. According to the present invention, image data is received from a handheld electronic device and rendered on the display 118.

FIG. 3 is a block diagram of a handheld electronic device 102 in accordance with exemplary embodiments of the present disclosure. The handheld electronic device 102 may be, for example, a mobile telephone, a PDA, a digital audio player, an e-reader, or other handheld device. The handheld electronic device 102 includes a motion sensor 110 that senses motion of the handheld electronic device 102, a processor 302 that forms motion data corresponding to the sensed motion, and wireless communication module 112. In the exemplary embodiment shown, the wireless communication uses an RF antenna 304; however, other forms of wireless communication may be used. Optionally, the motion data may be stored in a memory 306.

An image dependent upon the motion data is rendered on a display 126 of the handheld electronic device 102. The image 124 is generated within the handheld electronic device 102.

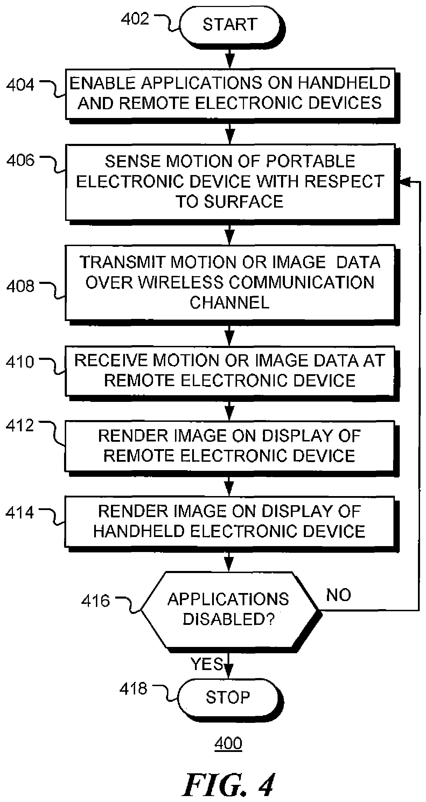

FIG. 4 is a flow chart of a method 400 for image data generation in accordance with exemplary embodiments of the present disclosure. Following start block 402, applications are enabled on a remote electronic device and on a handheld electronic device at block 404. These applications may include motion sensing and motion-to-image mapping applications to interpret motion of the handheld device, control communication between the handheld device and a remote electronic device, and control rendering of images on the displays. At block 406, motion of the handheld electronic device is sensed and, at block 408, corresponding data, relating to images derived from the motion and generated by a motion-to-image application executing on the handheld electronic device, is transmitted by the handheld electronic device to the remote electronic device over a wireless communication channel. The data is received by the remote electronic device at block 410 and is used, at block 412, to render an image on the remote electronic device display. At block 414, a corresponding image is displayed on a display of the handheld electronic device. The image is generated on the handheld electronic device from the sensed motion or from the motion data. If the application executing on the handheld electronic device or the remote electronic device is terminated, as depicted by the positive branch from decision block 416, the method terminates at block 418. Otherwise, as depicted by the negative branch from decision block 416, flow returns to block 406.

It will be appreciated that any module or component disclosed herein that executes instructions may include or otherwise have access to non-transient and tangible processor readable media such as storage media, computer storage media, or data storage devices (removable or non-removable) such as, for example, magnetic disks, optical disks, or tape data storage. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be described may be implemented using computer readable/executable instructions that may be stored or otherwise held by such computer readable media.

The implementations of the present disclosure described above are intended to be merely exemplary. It will be appreciated by those of skill in the art that alterations, modifications and variations to the illustrative embodiments disclosed herein may be made without departing from the scope of the present disclosure. Moreover, selected features from one or more of the above-described embodiments may be combined to create alternative embodiments not explicitly shown and described herein.

The present disclosure may be embodied in other specific forms without departing from essential characteristics. The described embodiments are to be considered in all respects only as illustrative and not restrictive. The scope of the disclosure is, therefore, indicated by the appended claims rather than by the foregoing description.

## Claims

1. A method for generating an image (120) on an electronic device (104), comprising:
sensing motion of a handheld electronic device (102) across a surface using a sensor (110) of the handheld electronic device (102) comprising an optical sensor located at a corner of the handheld electronic device (102), while a motion sensing application of the handheld electronic device 102 is enabled,
and in which the sensing motion is with respect to the surface using the sensor (110) of the handheld electronic device (102);
**characterized by**
enabling a motion-to-image mapping application on the handheld electronic device (102) and generating image data in response to the sensed motion;
transmitting the image data from the handheld electronic device (102) to an electronic device (104) that is remote from the handheld electronic device (102); and
rendering the image (120) representative of the sensed motion of the handheld electronic device (102) on a display (118) of the remote electronic device (104), the image (120) generated from the transmitted data;
rendering the image data, as an image (124) on a display (126) of the handheld electronic device (102).

2. A system comprising a handheld electronic device (102) and an electronic device (104), that is remote from the handheld electronic device (102),
the remote electronic device (104) comprising:
a wireless receiver (116) operable to receive image data transmitted from the handheld electronic device (102), the image data dependent upon motion of the handheld electronic device (102) across a surface;
a processor (204);
a display (118) operable to render an image (120) from the image data; and
a wireless transmitter (116);
the handheld electronic device (102) comprising:
a processor (302) operable to execute a motion sensing application and
a motion-to-image mapping application for generating image data in response to the sensed motion;
a sensor (110) operable to sense motion of the handheld electronic device (102) across the surface while the motion sensing application is executed by the processor (302), and where the sensor comprises an optical sensor located at a corner of the handheld electronic device (102), and in which the sensing motion is with respect to the surface using the sensor of the handheld electronic device;
a wireless transmitter (112) operable to transmit image data representative of the sensed motion to the remote electronic device (104);
a wireless receiver (112); and
a display (126) operable to render an image (124) from the image data.

3. The system of claim 2, where the image (120) rendered on the display (118) of the remote electronic device (104) comprises a trajectory that follows motion of the handheld electronic device (102) while the motion sensing application of the handheld electronic device (102) is enabled.

4. A non-transitory processor-readable medium having processor-executable instructions, which when executed by a processor (302) of a handheld electronic device (102), cause the handheld electronic device to:
generate image data representative of sensed motion of the handheld electronic device (102) across a surface sensed while a motion sensing application is executed by the processor, motion sensed by a motion sensor (110) of the handheld electronic device operable to sense motion of the handheld electronic device with respect to the surface, where the sensor comprises an optical sensor located at a corner of the handheld electronic device (102);
transmit the image data to a remote electronic device (104) over a wireless communication channel (114); and
render the image data as an image (124) on a display (126) of the handheld electronic device (102).

## Patentansprüche

1. Verfahren zum Erzeugen eines Bildes (120) auf einer elektronischen Vorrichtung (104), das Folgendes umfasst:
Erfassen einer Bewegung auf einer elektronischen Handvorrichtung (102) über eine Fläche unter Verwendung eines Sensors (110) der elektronischen Handvorrichtung (102), die einen optischen Sensor umfasst, der sich in einer Ecke der elektronischen Handvorrichtung (102) befindet, während eine Bewegungserfassungsanwendung der elektronischen Handvorrichtung (102) aktiviert ist, und wobei das Erfassen der Bewegung mit Bezug auf die Fläche unter Verwendung des Sensors (110) der elektronischen Handvorrichtung (102) erfolgt;
**gekennzeichnet durch**
Aktivieren einer Bewegung-zu-Bild-Mapping-Anwendung auf der elektronischen Handvorrichtung (102) und Erzeugen von Bilddaten in Reaktion auf die erfasste Bewegung;
Übertragen der Bilddaten von der elektronischen Handvorrichtung (102) zu einer elektronischen Vorrichtung (104), die von der elektronischen Handvorrichtung (102) entfernt ist; und
Rendern des Bildes (120), das die Bewegung der elektronischen Handvorrichtung (102) repräsentiert, auf einer Anzeige (118) der entfernten elektronischen Vorrichtung (104), wobei das Bild (120) aus den übertragenen Daten erzeugt wird;
Rendern der Bilddaten als ein Bild (124) auf einer Anzeige (126) der elektronischen Handvorrichtung (102).

2. System, das eine elektronische Handvorrichtung (102) und eine elektronischen Vorrichtung (104), die von der elektronischen Handvorrichtung (102) entfernt ist, umfasst,
wobei die entfernte elektronische Vorrichtung (104) Folgendes umfasst:
einen drahtlosen Empfänger (116), der zum Empfangen von Bilddaten, die von der elektronischen Handvorrichtung (102) übertragen werden, betreibbar ist, wobei die Bilddaten von einer Bewegung der elektronischen Handvorrichtung (102) über eine Fläche abhängig sind;
einen Prozessor (204);
eine Anzeige (118), die zum Rendern eines Bildes (120) aus den Bilddaten betreibbar ist; und
einen drahtlosen Sender (116);
wobei die elektronische Handvorrichtung (102) Folgendes umfasst:
einen Prozessor (302), der zum Ausführen einer Bewegungserfassungsanwendung und einer Bewegung-zu-Bild-Mapping-Anwendung betreibbar ist, um in Reaktion auf die erfasste Bewegung Bilddaten zu erzeugen;
einen Sensor (110), der zum Erfassen einer Bewegung der elektronischen Handvorrichtung (102) über die Fläche betreibbar ist, während die Bewegungserfassungsanwendung vom Prozessor (302) ausgeführt wird, und wobei der Sensor einen optischen Sensor umfasst, der sich in einer Ecke der elektronischen Handvorrichtung (102) befindet, und wobei das Erfassen der Bewegung mit Bezug auf die Fläche unter Verwendung des Sensors der elektronischen Handvorrichtung erfolgt;
einen drahtlosen Sender (112), der zum Übertragen von Bilddaten, die die erfasste Bewegung repräsentieren, zur entfernten elektronischen Vorrichtung (104) betreibbar ist;
einen drahtlosen Empfänger (112); und
eine Anzeige (126), die zum Rendern eines Bildes (124) aus den Bilddaten betreibbar ist.

3. System nach Anspruch 2, wobei das Bild (120), das auf der Anzeige (118) der entfernten elektronischen Vorrichtung (104) gerendert wird, eine Trajektorie umfasst, die der Bewegung der elektronischen Handvorrichtung (102) folgt, während die Bewegungserfassungsanwendung der elektronischen Handvorrichtung (102) aktiviert ist.

4. Nichttransitorisches prozessorlesbares Medium mit prozessorausführbaren Anweisungen, die, wenn sie von einem Prozessor (302) einer elektronischen Handvorrichtung (102) ausgeführt werden, die elektronische Handvorrichtung zu Folgendem veranlassen:
Erzeugen von Bilddaten, die eine erfasste Bewegung der elektronischen Handvorrichtung (102) über eine Fläche repräsentieren, die erfasst wird, während eine Bewegungserfassungsanwendung vom Prozessor ausgeführt wird, wobei die Bewegung von einem Bewegungssensor (110) der elektronischen Handvorrichtung erfasst wird, der zum Erfassen einer Bewegung der elektronischen Handvorrichtung mit Bezug auf die Fläche betreibbar ist, wobei der Sensor einen optischen Sensor umfasst, der sich in einer Ecke der elektronischen Handvorrichtung (102) befindet;
Übertragen der Bilddaten über einen drahtlosen Kommunikationskanal (114) zu einer entfernten elektronischen Vorrichtung (104); und
Rendern der Bilddaten als ein Bild (124) auf einer Anzeige (126) der elektronischen Handvorrichtung (102).

## Revendications

1. Procédé pour générer une image (120) sur un dispositif électronique (104), comprenant :
la détection d'un mouvement d'un dispositif électronique portatif (102) sur une surface en utilisant un capteur (110) du dispositif électronique portatif (102) comprenant un capteur optique situé à un coin du dispositif électronique portatif (102), tandis qu'une application de détection de mouvement du dispositif électronique portatif (102) est activée, et dans lequel la détection du mouvement se fait par rapport à la surface en utilisant le capteur (110) du dispositif électronique portatif (102) ;
**caractérisé par**
l'activation d'une application de mise en correspondance mouvement-image sur le dispositif électronique portatif (102) et la génération de données d'image en réponse au mouvement détecté ;
la transmission des données d'image du dispositif électronique portatif (102) à un dispositif électronique (104) qui est distant du dispositif électronique portatif (102) ; et
le rendu de l'image (120) représentative du mouvement détecté du dispositif électronique portatif (102) sur un affichage (118) du dispositif électronique (104) distant, l'image (120) étant générée à partir des données transmises ;
le rendu des données d'image sous la forme d'une image (124) sur un affichage (126) du dispositif électronique portatif (102).

2. Système comprenant un dispositif électronique portatif (102) et un dispositif électronique (104) qui est distant du dispositif électronique portatif (102),
le dispositif électronique (104) distant comprenant :
un récepteur sans fil (116) fonctionnant pour recevoir des données d'image transmises à partir du dispositif électronique portatif (102), les données d'image dépendant d'un mouvement du dispositif électronique portatif (102) sur une surface ;
un processeur (204) ;
un affichage (118) fonctionnant pour rendre une image (120) à partir des données d'image ; et
un émetteur sans fil (116) ;
le dispositif électronique portatif (102) comprenant :
un processeur (302) fonctionnant pour exécuter une application de détection de mouvement et une application de mise en correspondance mouvement-image pour générer des données d'image en réponse au mouvement détecté ;
un capteur (110) fonctionnant pour détecter un mouvement du dispositif électronique portatif (102) sur la surface tandis que l'application de détection de mouvement est exécutée par le processeur (302), et où le capteur comprend un capteur optique situé à un coin du dispositif électronique portatif (102), et dans lequel la détection du mouvement se fait par rapport à la surface en utilisant le capteur du dispositif électronique portatif ;
un émetteur sans fil (112) fonctionnant pour transmettre des données d'image représentatives du mouvement détecté au dispositif électronique (104) distant ;
un récepteur sans fil (112) ; et
un affichage (126) fonctionnant pour rendre une image (124) à partir des données d'image.

3. Système de la revendication 2, où l'image (120) rendue sur l'affichage (118) du dispositif électronique (104) distant comprend une trajectoire qui suit un mouvement du dispositif électronique portatif (102) tandis que l'application de détection de mouvement du dispositif électronique portatif (102) est activée.

4. Support non transitoire lisible par un processeur ayant des instructions exécutables par un processeur, qui lorsqu'elles sont exécutées par un processeur (302) d'un dispositif électronique portatif (102), amènent le dispositif électronique portatif à :
générer des données d'image représentatives d'un mouvement détecté du dispositif électronique portatif (102) sur une surface détectée tandis qu'une application de détection de mouvement est exécutée par le processeur, le mouvement détecté par un mouvement capteur (110) du dispositif électronique portatif fonctionnant pour détecter un mouvement du dispositif électronique portatif par rapport à la surface, où le capteur comprend un capteur optique situé à un coin du dispositif électronique portatif (102) ;
transmettre les données d'image à un dispositif électronique (104) distant sur un canal de communication sans fil (114) ; et
rendre les données d'image sous la forme d'une image (124) sur un affichage (126) du dispositif électronique portatif (102).
